# EUROPEAN PATENT APPLICATION

(11) **EP 4 607 390 A1**
(43) Date of publication of application: **27.08.2025**
(21) Application number: 23890152.4
(22) Date of filing: 15.06.2023
(51) Int. Cl.: G06F 21/60

(54) **DATA RECOVERY METHOD AND APPARATUS IN STORAGE DEVICE**

(30) Priority: 14.11.2022 CN 202211422457; 31.01.2023 CN 202310145361
(71) Applicant: Huawei Technologies Co., Ltd., Shenzhen, Guangdong 518129 (CN)
(72) Inventor: PU, Guiyou, Shenzhen, Guangdong 518129 (CN)
(74) Representative: MERH-IP Matias Erny Reichl Hoffmann Patentanwälte PartG mbB
(86) International application number: PCT/CN2023/100509
(87) International publication number: WO 2024/103710

(57) **Abstract**

This application relates to the computer field, and provides a data restoration method and apparatus for a storage device, to implement data restoration without losing data after an attack by ransomware, and reduce performance overheads and storage space overheads. The method includes: A storage device stores data in append write mode; determines first data in response to inaccessibility to target data, where the first data is data marked as invalid, and is data associated with the target data; and restores the first data.

## Description

This application claims priority to Chinese Patent Application No. 202211422457.2, filed with the China National Intellectual Property Administration on November 14, 2022 and entitled "DATA RESTORATION METHOD", and further claims priority to Chinese Patent Application No. 202310145361.4, filed with the China National Intellectual Property Administration on January 31, 2023 and entitled "DATA RESTORATION METHOD AND APPARATUS FOR STORAGE DEVICE", both of which are incorporated herein by reference in their entireties.

### TECHNICAL FIELD

This application relates to the computer field, and in particular, to a data restoration method and apparatus for a storage device.

### BACKGROUND

Ransomware is a computer virus that poses a greatest threat to data security currently. The ransomware encrypts and deletes user data, and therefore a user cannot obtain file information of the user, to create an opportunity to extort payments from the user in exchange for data decryption.

Currently, for protection against the ransomware, the industry mainly uses a method of snapshot rollback to roll a system back to an old data version and use the old data version to implement data restoration, thereby avoiding extortion by the ransomware.

However, restoring data using snapshots refers to using data from an earlier time point for restoration. This results in loss of data information that was not saved between two snapshots. In addition, this solution requires additional management of snapshots and storage space management of the snapshots, which increases performance overheads and storage space overheads. In particular, as a better way to protect against the ransomware, high-density snapshots require more frequent snapshot management, resulting in more performance overheads and storage space overheads.

### SUMMARY

This application provides a data restoration method and apparatus for a storage device, to implement data restoration without losing data after an attack by ransomware, and reduce performance overheads and storage space overheads.

To achieve the foregoing objectives, the following technical solutions are used in embodiments of this application.

According to a first aspect, a data restoration method for a storage device is provided. The storage device stores data in append write mode. The method may specifically include: determining first data in response to inaccessibility to target data, where the first data is data marked as invalid, and is data associated with the target data; and restoring the first data.

According to the solutions provided in this application, if there is inaccessible target data, it can be learned that the target data is data that is illegally encrypted by ransomware or data that is modified, and data before being encrypted or data before being modified has been deleted by the ransomware. When data is stored in append write mode, the data is first marked as invalid data before being modified or deleted, and garbage collection is then performed. Actually, the data deleted by the ransomware is not physically deleted but is marked as invalid data. Therefore, before the garbage collection is performed, the data marked as invalid may be used as data associated with the target data, and the data marked as invalid is restored to data before being encrypted by the ransomware. In addition, this solution does not require additional storage space overheads and computing overheads, and can achieve an objective of reducing performance overheads and storage space overheads.

In a possible implementation, the target data may be data obtained by illegally encrypting the first data or data obtained by modifying the first data. Modifying the first data may be deleting the first data, so that the target data cannot be accessed.

In another possible implementation, the method provided in this application may further include: when a start condition is met, determining whether the storage device stores inaccessible data.

In another possible implementation, the start condition may include: a preset moment is reached; or a quantity of data marked as invalid is greater than or equal to a first threshold; or remaining storage space of the storage device is less than or equal to a second threshold.

The remaining storage space of the storage device may be remaining storage space of a medium of the storage device, and the storage device stores data in the medium in append write mode.

The storage device may be a solid-state drive, a storage system, a server having a storage function, or the like.

According to a second aspect, a data restoration apparatus for a storage device is provided. The storage device stores data in append write mode. The apparatus may include a determining unit and a restoration unit.

The determining unit is configured to determine first data in response to inaccessibility to target data. The first data is data marked as invalid, and is data associated with the target data.

The restoration unit is configured to restore the first data.

In another possible implementation, the data restoration apparatus for a storage device provided in this application may further include a judging unit, configured to: when a start condition is met, determine whether the storage device stores inaccessible data.

In another possible implementation, the judging unit may be specifically configured to determine whether the reference data stores inaccessible data.

It should be noted that the data restoration apparatus for a storage device provided in the second aspect of this application is configured to perform the method provided in the first aspect. For specific implementations and effects of the apparatus, refer to the descriptions of the first aspect or any one of possible implementations of the first aspect. Details are not described herein again.

According to a third aspect, this application provides a storage device. The storage device includes a processor, an interface, and a medium, the storage device stores data in append write mode, the processor communicates with the interface and the medium, and the processor is configured to perform various solutions in the first aspect.

According to a fourth aspect, a computer-readable storage medium is provided, and includes computer software instructions. When the computer software instructions are run on a computer, the computer is enabled to perform the data restoration method for a storage device according to any one of the foregoing aspects or any one of possible implementations.

According to a fifth aspect, a computer program product is provided. When the computer program product runs on a computer, the computer is enabled to perform the data restoration method for a storage device according to any one of the foregoing aspects or any one of the possible implementations.

According to a sixth aspect, a chip system is provided. The chip system includes a processor, and may further include a memory, configured to implement a function in the foregoing method. The chip system may include a chip, or may include a chip and another discrete component.

According to a seventh aspect, a data restoration system is provided, and includes a data restoration apparatus and a medium, where the medium stores data in append write mode. The data restoration apparatus is configured to perform the data restoration method for a storage device according to the first aspect and any one of the possible implementations of the first aspect.

The solutions provided in the third aspect to the seventh aspect are used to implement the method provided in the first aspect, and therefore can achieve same beneficial effects as those in the first aspect. Details are not described herein again.

It should be noted that all possible implementations of any one of the foregoing aspects may be combined on a premise that there is no conflict between the solutions.

### BRIEF DESCRIPTION OF DRAWINGS

FIG. 1 is a diagram of a technical principle of ransomware according to an embodiment of this application;
FIG. 2 is a diagram of a structure of a storage device according to an embodiment of this application;
FIG. 3 is a diagram of a structure of a data restoration apparatus for a storage device according to an embodiment of this application;
FIG. 4 is a schematic flowchart of a data restoration method for a storage device according to an embodiment of this application;
FIG. 5 is a schematic flowchart of another data restoration method for a storage device according to an embodiment of this application;
FIG. 6 is a diagram of a data storage scenario according to an embodiment of this application;
FIG. 7 is a diagram of a structure of a data restoration apparatus for a storage device according to an embodiment of this application;
FIG. 8 is a diagram of a structure of another data restoration apparatus for a storage device according to an embodiment of this application; and
FIG. 9 is a diagram of a structure of a storage device according to an embodiment of this application.

### DESCRIPTION OF EMBODIMENTS

For ease of understanding, terms in embodiments of this application are described first.

Append write means to write newly added data to an end of a file. When a computer system stores data in append write mode, in a case of data modification, deletion, or the like, the computer system does not physically modify old data to be deleted, but writes the data to new storage space or marks the data as to-be-deleted. Actual data deletion is performed during garbage collection, to release storage space.

The principle of the ransomware is to encrypt user data and delete original data, making the data inaccessible to the user, to extort payments from the user. The key logic of the ransomware is to effectively delete the original data of the user to achieve encryption effects.

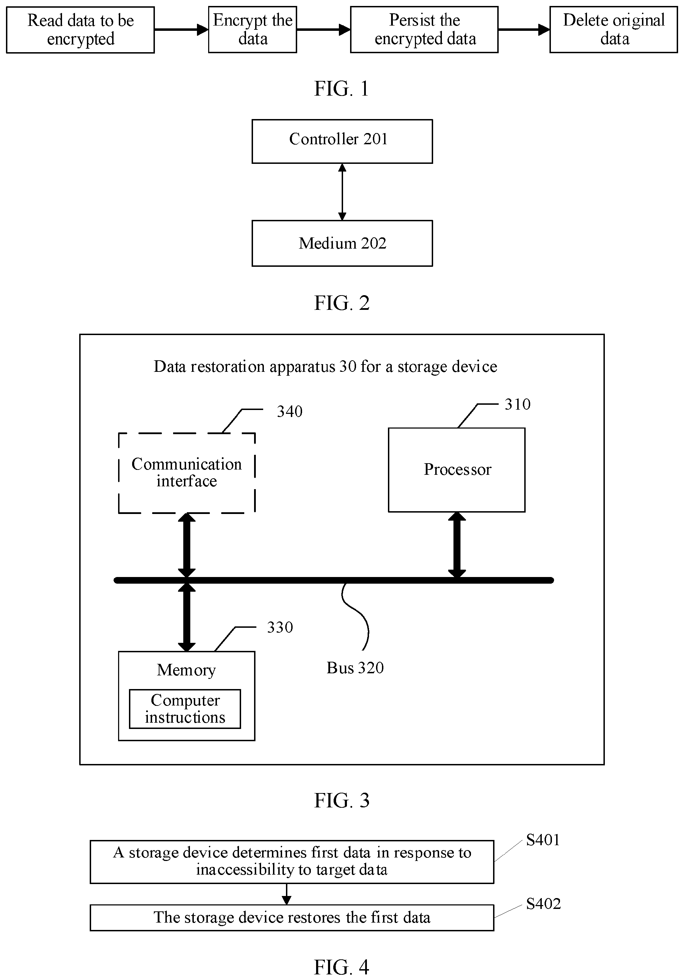

FIG. 1 shows a technical principle of ransomware. The ransomware first reads data to be encrypted, encrypts the data, persists the encrypted data, and deletes original data.

This application provides a data restoration method for a storage device. When data is stored in append write mode, if there is inaccessible target data, it can be learned that the target data is data that is illegally encrypted by ransomware or data that is modified, and data before being encrypted or data before being modified has been deleted by the ransomware. When data is stored in append write mode, the data is first marked as invalid data before being modified or deleted, and garbage collection is performed. Actually, the data deleted by the ransomware is not physically deleted but is marked as invalid data. Therefore, before the garbage collection is performed, the data marked as invalid may be used as data associated with the target data, and the data marked as invalid is restored to data before being encrypted by the ransomware. In addition, this solution does not require additional storage space overheads and computing overheads, and can achieve an objective of reducing performance overheads and storage space overheads.

The storage device has a capability to perform append write. Therefore, there is naturally a data copy. By detecting damage caused by the ransomware and controlling the garbage collection, data restoration can be implemented at low costs in case of an attack by ransomware.

The following describes the solutions provided in embodiments of this application in detail with reference to accompanying drawings.

In one aspect, FIG. 2 is a diagram of a structure of a storage device according to an embodiment. The storage device may include a controller 201 and a medium 202.

The controller 201 runs a service, and stores data in storage space of the storage device in append write mode. The storage space may be logical storage space, for example, storage space provided by a storage resource pool including the medium 202, or may be storage space provided by the medium 202, for example, a logical block address (LBA). The controller 201 may include a processor and an interface, and the processor communicates with the interface through a bus.

The medium 202 may be a solid-state drive (SSD), a flash memory, or another product type. This is not limited in embodiments of this application.

Further, the storage device may be a product type that includes a storage function, such as a computer, a server, or a terminal. The product type of the storage device is not limited in embodiments of this application.

In another implementation, the storage device in this embodiment of the present invention is a hard disk, for example, an SSD, and includes a hard disk controller and a medium. The medium may be a flash. The hard disk controller is configured to implement the solutions in embodiments of the present invention.

In another aspect, an embodiment of this application provides a data restoration apparatus 30 for a storage device. FIG. 3 is a diagram of a structure of the data restoration apparatus 30 for a storage device. The data restoration apparatus 30 for a storage device may be the controller or the hard disk controller shown in FIG. 2.

As shown in FIG. 3, the data restoration apparatus 30 for a storage device may include a processor 310, a bus 320, a memory 330, and a communication interface 340. The processor 310, the memory 330, and the communication interface 340 are connected through the bus 320.

It should be understood that, in this embodiment, the processor 310 may be a central processing unit (central processing unit, CPU), or the processor 310 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor or any conventional processor or the like.

Alternatively, the processor 310 may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 340 is configured to implement communication between a processing apparatus 30 and an external device or component.

The bus 320 may include a path, configured to transmit information between the foregoing components (for example, the processor 310 and the memory 330). In addition to a data bus, the bus 320 may further include a power bus, a control bus, a status signal bus, or the like. However, for clear description, various types of buses are marked as the bus 320 in the figure. The bus 320 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The buses 320 may be classified into address buses, data buses, control buses, or the like.

In an example, the data restoration apparatus 30 for a storage device may include a plurality of processors. The processor may be a multi-core processor (multi-CPU). The processor herein may be one or more devices, circuits, and/or computing units configured to process data (for example, computer program instructions).

It should be noted that the data restoration apparatus 30 for a storage device including one processor 310 and one memory 330 in FIG. 3 is merely as an example. The processor 310 and the memory 330 each indicate a type of device or component. In a specific embodiment, a quantity of each type of devices or components may be determined based on a service requirement.

The memory 330 may be a volatile memory pool or a non-volatile memory pool, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the processor 310 may implement the following functions by running or executing a software program and/or a module stored in the memory 330:
determining first data in response to inaccessibility to target data, where the first data is data marked as invalid, and is data associated with the target data; and restoring the first data.

"In response to inaccessibility to target data" may include: The storage device cannot access the target data during background inspection, or cannot access the target data based on an access request, or it is determined that there is inaccessible target data in the storage device during garbage collection. A specific implementation is not limited in embodiments of the present invention.

In still another aspect, an embodiment of this application provides a data restoration method for a storage device. The storage device stores data in append write mode. The method may be performed by the storage device. Specifically, the method may be performed by a data restoration apparatus that is deployed in the storage device. In descriptions of the following embodiments, the storage device performs the solutions provided in this application, but this is not specifically limited.

The data restoration apparatus for a storage device may be the controller or the hard disk controller shown in FIG. 2 or the data restoration apparatus 30 for a storage device shown in FIG. 3.

The storage device stores data in append write mode. When data is deleted through an operation such as modification or deletion, old data is not deleted, but the data is written to new storage space or the data is marked as to-be-deleted (marked as invalid data), and is deleted during the garbage collection to release the storage space.

For example, the storage device may include a medium, and the medium is configured to store data. Specifically, the medium may store the data in append write mode.

It should be noted that the data marked as invalid may be data formed by modifying or deleting the data, or may be data that is encrypted and deleted by the ransomware. This is not limited in embodiments of this application.

The following describes a data restoration method for a storage device provided in this application in detail with reference to the accompanying drawings. FIG. 4 is a schematic flowchart of a data processing method for a storage device provided in this application. As shown in FIG. 4, the method includes the following steps.

S401: A storage device determines first data in response to inaccessibility to target data.

The first data is data marked as invalid, and is data associated with the target data.

In a possible implementation, the target data may be data obtained by illegally encrypting the first data or data obtained by modifying the first data. After the first data is illegally encrypted by ransomware, encrypted data, that is, the target data, is formed. The ransomware deletes the first data. The storage device first marks the first data as invalid data based on this operation.

"In response to inaccessibility to target data" may include: The storage device cannot access the target data during background inspection, or cannot access the target data based on an access request, or determines, during garbage collection, whether there is inaccessible target data in the storage device. A specific implementation is not limited in embodiments of the present invention.

For example, it is assumed that data 1 is data encrypted by the ransomware, that is, target data to be accessed, and data 2 is data before being encrypted by the ransomware. After the data 1 is obtained by encrypting the data 2 by the ransomware, the ransomware deletes the data 2, and the storage device marks the data 2 as invalid data based on the deletion operation. The data 2 is used as data associated with the data 1.

Further, the storage device may perform the operation of S401 periodically or at a preset moment. This is not specifically limited in embodiments of this application.

Specifically, if the storage device determines that there is inaccessible target data in S401, it indicates that there is data deleted by the ransomware in the target data. After determining the first data associated with the target data, the storage device performs S402 to restore the first data.

S402: The storage device restores the first data.

For example, if there are a plurality of pieces of data associated with the target data, for example, there are a plurality of pieces of data marked as invalid, in the storage device, there may be a time difference between time at which the data is marked as invalid and time at which the storage device performs the garbage collection. Therefore, the plurality of pieces of data marked as invalid may include data that is marked as invalid due to modification or deletion performed by the storage device during normal operation. Generally, a plurality of pieces of data associated with the target data, that is, a plurality of pieces of invalid data, have version numbers or timestamps for indicating a sequence in which the invalid data is generated. Therefore, when there are a plurality of pieces of data associated with the target data, latest data marked as invalid may be determined based on the timestamps or the version numbers of the invalid data, and the latest data marked as invalid is restored. In other words, the latest data marked as invalid is restored to valid data. Specifically, restoring the data marked as invalid to the valid data may implement canceling an invalid mark on the data.

According to the solutions provided in this application, data restoration without losing data after an attack by ransomware is implemented. In addition, this solution does not require additional storage space overheads and computing overheads, and can achieve an objective of reducing performance overheads and storage space overheads.

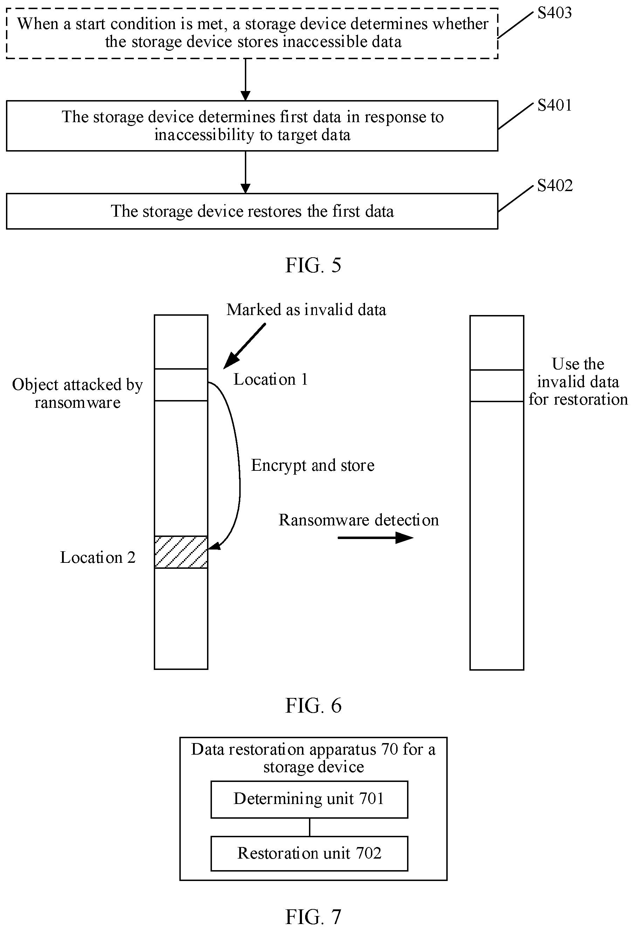

Further, as shown in FIG. 5, the method provided in this embodiment of this application may further include S403.

S403: When a start condition is met, a storage device determines whether the storage device stores inaccessible data.

Specific content of the start condition may be configured based on an actual requirement. This is not limited in embodiments of this application.

In a possible implementation, the start condition may include: a preset moment is reached. The preset moment may be a moment at which the garbage collection is performed.

In a possible implementation, the start condition may include that a quantity of data marked as invalid is greater than or equal to a first threshold. In other words, the garbage collection is performed when there is a large amount of invalid data.

The first threshold may be an upper limit of a quantity of pieces of invalid data for the garbage collection. A value of the first threshold may be configured based on an actual requirement. This is not limited in embodiments of this application.

In a possible implementation, the start condition may include: remaining storage space of the storage device is less than or equal to a second threshold. In other words, the garbage collection is performed when the storage space of the storage device is insufficient.

For example, the remaining storage space of the storage device may be remaining storage space of a medium in the storage device.

The second threshold may be a lower limit of a storage space margin for the garbage collection. A value of the second threshold may be configured based on an actual requirement. This is not limited in embodiments of this application.

For example, the storage device performs ransomware detection (that is, performs S403 or S401). If no ransomware is found, the garbage collection is started to erase the data marked as invalid, to release the storage space. If ransomware is found, reverse description information marked as invalid data is scanned. The reverse description information records a logical block address LBA corresponding to the data marked as invalid, to determine data marked as invalid that has a same LBA as the target data. When the target data corresponds to a plurality of pieces of data marked as invalid, based on the foregoing descriptions in embodiments of the present invention, latest invalid data marked as invalid data is determined, and the invalid data is restored to valid data, to implement access to the target data, thereby avoiding an impact of the ransomware on a service.

The following describes the method provided in this application in detail by using a specific example.

For example, in a data storage scenario shown in FIG. 6, when the storage device experiences an attack from the ransomware, the ransomware encrypts an attacked object (data X at a location 1) and stores the encrypted object. The storage device stores the encrypted data X in append write mode at a location 2. Then, the ransomware deletes the original data X. After receiving a deletion instruction, the storage device marks the original data X (the data at the location 1) as invalid data. When the storage device finds that the data at the location 2 cannot be accessed, the storage device determines that an attack by ransomware happens, so that the garbage collection is not started, and data (the data X at the location 1) associated with the data at the location 2 is restored. Specifically, before the garbage collection is performed, ransomware detection may be performed (specifically, by determining whether there is inaccessible data, for example, by determining whether the data at the location 2 is accessible), to implement the solutions of this application.

The foregoing mainly describes the solutions provided in embodiments of the present invention from a perspective of a working principle of the storage device. It may be understood that, to implement the foregoing functions, the storage device or the like includes corresponding hardware structures and/or software modules for performing the functions. A person skilled in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In embodiments of the present invention, the storage device or the like may be divided into functional modules based on the foregoing method example. For example, the functional modules corresponding to the corresponding functions may be obtained through division, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

When each functional module corresponding to each corresponding function is obtained through division, FIG. 7 shows a data restoration apparatus for a storage device according to an embodiment of this application, to implement a function of the storage device in the foregoing embodiments. As shown in FIG. 7, the data restoration apparatus 70 for a storage device may include a determining unit 701 and a restoration unit 702. The determining unit 701 is configured to perform the process S401 in FIG. 4 or FIG. 5. The restoration unit 702 is configured to perform the process S402 in FIG. 4 or FIG. 5. All related content of the steps in the foregoing method embodiments may be cited in function descriptions of the corresponding functional modules. Details are not described herein again.

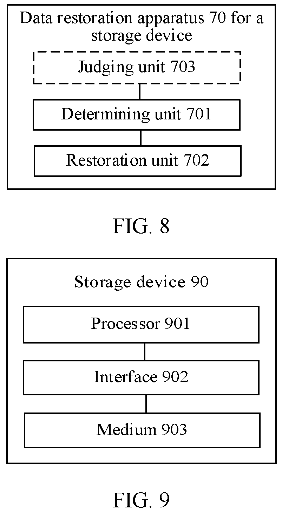

Further, as shown in FIG. 8, the data restoration apparatus 70 for a storage device provided in an embodiment of this application may further include a judging unit 703, configured to perform the process S403 in FIG. 5.

When an integrated unit is used, FIG. 9 shows a storage device 90 provided in an embodiment of this application, to implement a function of the storage device in the foregoing embodiments. The storage device 90 includes a processor 901, an interface 902, and a medium 903.

The storage device 90 stores data in append write mode. The processor 901 communicates with the interface 902 and the medium 903, and the processor 901 is configured to perform the method in embodiments of the present invention. The storage device 90 may be a storage system, a server, or a hard disk. The storage system may be a storage array or a distributed storage.

As described above, the data restoration apparatus 70 for a storage device or the storage device 90 provided in this embodiment of this application may be configured to implement the function of the storage device in the foregoing embodiments of this application. For ease of description, only parts related to this embodiment of this application are shown. For specific technical details that are not disclosed, refer to embodiments of this application.

An embodiment of this application further provides a data restoration system, including a data restoration apparatus and a medium. The medium stores data in append write mode. The data restoration apparatus may be the data restoration apparatus 70 for a storage device or the storage device 90.

In another form of this embodiment, a computer-readable storage medium is provided. The computer-readable storage medium stores computer software instructions, and when the computer software instructions are executed, the data restoration method for a storage device in the foregoing method embodiments is performed.

In another form of this embodiment, a computer program product including instructions is provided. When the computer program product runs on a computer, the computer is enabled to perform the data restoration method for a storage device in the foregoing method embodiments.

An embodiment of this application further provides a chip system. The chip system includes a processor, configured to implement the technical method in embodiments of the present invention. In a possible design, the chip system further includes a memory, configured to store program instructions and/or data that are essential for embodiments of the present invention. In a possible design, the chip system further includes a memory, configured to be used by the processor to invoke application program code stored in the memory. The chip system may include one or more chips, or may include a chip and another discrete component. This is not specifically limited in embodiments of this application.

Based on the foregoing descriptions about implementations, a person skilled in the art may understand that, for a purpose of convenient and brief description, division into the foregoing functional modules is used as an example for illustration. In actual application, the foregoing functions may be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technologies, or all or some of the technical solutions may be implemented in a form of a software product. The software product is stored in a storage medium and includes several instructions for enabling a device (which may be a single-chip microcomputer, a chip or the like) or a processor (processor) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A data restoration method for a storage device, wherein the storage device stores data in append write mode, and the method comprises:
determining first data in response to inaccessibility to target data, wherein the first data is data marked as invalid, and is data associated with the target data; and
restoring the first data.

2. The method according to claim 1, wherein the target data is data obtained by illegally encrypting the first data or data obtained by modifying the first data.

3. The method according to claim 1 or 2, wherein the method further comprises:
when a start condition is met, determining whether the storage device stores inaccessible data.

4. The method according to claim 3, wherein the start condition comprises:
a preset moment is reached; or
a quantity of data marked as invalid is greater than or equal to a first threshold; or
remaining storage space of the storage device is less than or equal to a second threshold.

5. A data restoration apparatus for a storage device, wherein the storage device stores data in append write mode, and the apparatus comprises:
a determining unit, configured to determine first data in response to inaccessibility to target data, wherein the first data is data marked as invalid, and is data associated with the target data; and
a restoration unit, configured to restore the first data.

6. The apparatus according to claim 5, wherein the target data is data obtained by illegally encrypting the first data or data obtained by modifying the first data.

7. The apparatus according to claim 5 or 6, wherein the apparatus further comprises:
a judging unit, configured to: when a start condition is met, determine whether the storage device stores inaccessible data.

8. The apparatus according to claim 7, wherein the start condition comprises:
a preset moment is reached; or
a quantity of data marked as invalid is greater than or equal to a first threshold; or
remaining storage space of the storage device is less than or equal to a second threshold.

9. A storage device, wherein the storage device comprises a processor, an interface, and a medium; the storage device stores data in append write mode; the processor communicates with the interface and the medium; and the processor is configured to perform the method according to any one of claims 1 to 4.

10. A computer-readable storage medium, comprising computer software instructions, wherein when the computer software instructions are run in a computing device, the computing device is enabled to perform the data restoration method for a storage device according to any one of claims 1 to 4.

11. A computer program product, wherein when the computer program product runs on a computer, the computer is enabled to perform the data restoration method for a storage device according to any one of claims 1 to 4.
